# EUROPEAN PATENT SPECIFICATION

(11) **EP 3 109 664 B1**
(45) Date of publication and mention of the grant of the patent: **31.05.2023**
(21) Application number: 15173079.3
(22) Date of filing: 22.06.2015
(51) Int. Cl.: G01S 7/527, G01S 15/04, G01S 15/10, G01S 15/88, G01S 15/931

(54) **SENSOR FOR DETERMINING THE PRESENCE OF AN OBJECT AND PROCESS FOR USING THE SAME**
SENSOR ZUR BESTIMMUNG DER ANWESENHEIT EINES OBJEKTS UND VERFAHREN ZUR VERWENDUNG DES SENSORS
CAPTEUR POUR DÉTERMINER LA PRÉSENCE D'UN OBJET ET PROCÉDÉ POUR L'UTILISER

(43) Date of publication of application: 28.12.2016
(73) Proprietor: Continental Autonomous Mobility Germany GmbH, 85057 Ingolstadt (DE)
(72) Inventor: BAITINI, Mario, I-21100 Varese (IT); CLERICI, Ubaldo, I-21100 Varese (IT)
(74) Representative: Continental Corporation

(56) References cited:
- EP-A1- 2 693 231
- DE-B3-102013 226 085
- US-A- 4 677 599

## Description

### Technical field

The present invention relates to a sensor and to a process for determining presence of an object.

In particular the invention relates to range finding systems of the type in which an electro-mechanic transducer transmits a pulse burst or shot of (e.g. acoustic) energy towards a surface whose presence is to be detected and/or distance is to be measured, and subsequent echo signals received from the transducer are monitored to determine the temporal location of an echo from that surface.

The invention may be employed in the automotive field principally for parking or low speed maneuvering assistance systems, but also for different automotive applications (e.g. for vehicle security or antitheft protection solutions).

The invention may also be employed in different fields, such as robotics, in order to determine the presence of an object of or an obstacle in close proximity to a robot, or in any machine-to-machine application.

Furthermore, the invention may also be useful in systems for measuring a distance e.g. using an amplitude scan sensor for determining the distance of a target.

### Background of the invention

In the field of distance control/measurement sensors, generally ultrasound transducers are used for emitting a pulse of acoustic energy and receiving an echo whenever an object is present in the field of view of the sensor.

The temporal location of the echo provides an information in respect to the distance of the revealed object from the transducer itself. In this case, a direct measure of an echo signal is used to detect an object and to obtain an information relating to the object distance from the sensor.

In alternative or in combination, the known systems may also use a first transducer at a first place to emit a pulse of acoustic energy and a second different transducer at a second place to receive an echo signal. Timing between pulse emission and echo receipt provides an information on presence and distance of an object (indirect measure).

In general, an ultrasonic wave transducer transmits a pulse burst and receives a reflected ultrasonic wave echo. An amplifier amplifies the output of the transmit-receive circuit, a band pass filter connected to the amplifier remove undesired frequencies from the received signal and an envelope detector connected to an output of the band pass filter generates the signal envelope. A comparator compares an output signal voltage of the signal envelope with a selected reference voltage.

In operation, the transducer emits an ultrasonic wave into the selected area. Immediately after the emission, the distance detection system is put in the signal receiving mode so as to allow to connect the transducer with the amplifier. The emitted ultrasonic wave is reflected on an obstacle or obstruction. After the emitted wave is received by the transducer and amplified by the amplifier, it is sent to the band pass filter to remove the undesired components. It is applied to the envelope detector for envelope detection and then to the comparator for comparison with the selected reference voltage. If the received signal is higher than the threshold, then an obstacle is detected.

Though the prior art systems above described are actually in use, particularly mounted on bumpers of vehicles to detect obstacles in close proximity of the bumper itself during park-assisted maneuvering, actually such ultrasonic sensors are affected by undesired effects, which reduce their capability to properly detect objects in close proximity to the vehicle.

Indeed, even after removal of a drive or excitation signal from the oscillator to the transducer, there still remains in the transducer a relatively high damping oscillation signal which, during the detection phase, will be undesirably amplified, detected and compared in the same way as the desirable signal.

As a result, the comparator will receive a mixed input of an undesirable signal resulting from the damping oscillation referred to above and a desirable signal resulting from the reflected wave or echo from the obstacle.

To avoid having a mixed input of an undesirable signal resulting from the undesired damping oscillation and the received echo, either the transmission power or the gain of the amplifier may be reduced. It is however clear that the gain reduction will affect both the transmission decay signal (undesirable signal) and the echo signal (desirable signal).

In the case where such a conventional ultrasonic wave distance detection system is used for automobiles in order to detect obstacles, however, the acoustic or sound pressure of the received ultrasonic wave changes depending upon obstacles and sometimes becomes very weak when the wave is directed to certain obstacles. Further, it is required that the detecting distance range of the detection system be within several meters, which inevitably results in the fact that the transmission power must be high. In addition, there still remains a damping oscillation phenomenon in the transducer (ringing effect).

This damping oscillation will cause the output of the amplifier to receive a signal level higher than, or at least comparable with, the received echo signal, thereby making it difficult, if not impossible, to detect objects at a short distance.

In general terms, current systems include one or a set of transceiver transducers that are used in turn to transmit and receive an ultrasonic signals and the echoes reflected back by a possible obstacle.

As explained, their coverage in the immediate proximity of the bumper is limited by the unwanted oscillation (self-decay of transmitted pulses) of the piezoelectric transducer (ringing effect) over a period of time (ringing time). Furthermore, this oscillation is affected by the environmental conditions of operation (especially by the temperature) and by the component tolerances since both transducers and other hardware components are affected by environmental conditions as well.

As above clarified, the ringing effect, the environmental conditions and the tolerances affect the echo direct measures. Additionally, considering indirect measures, for systems working with bi-static configuration and mono-static configuration the acquisition window is constrained by the presence of "cross talk" decay signals.

As a solution, the echo acquisition window is consequently reduced. In other terms, the transducer is not connected to the amplifier for receiving signals up to when the unwanted oscillations of the transducers are below a triggering threshold.

As a result, the minimum obstacle detection distance from the bumper cannot be less than about 30 cm (typical minimum value). In fact, to avoid false warnings, the trigger threshold and/or the acquisition window have to be set in such a way that the signals generated by the ringing effect are completely ignored. Several prior documents acknowledges the issue of the ringing effect in reducing detection capability of the ultrasonic sensors and propose complex solutions to address the problem. Document US 5267219 relates to acoustic range finding systems of the type in which an electro-acoustic transducer transmits a pulse or shot of acoustic energy towards a surface whose distance is to be measured, and subsequent signals received from the transducer are monitored to determine the temporal location of an echo from that surface.

To achieve an improved measurement, in an acoustic pulse-echo ranging system, a high impedance piezoelectric transducer element is connected via a transformer to a transmitter, and also directly to a high impedance input of a receiver through a network, in parallel with the transducer element which includes a limiting resistor having a value which is low compared with the impedance of the transducer and a pair of oppositely connected diodes connected across the receiver input. The diodes are in series with the resistor and conduct to complete a damping circuit for large amplitude signals during transmission, and to limit the amplitude of signals applied to the receiver. By this means, the dynamic range required by the receiver is much reduced, and effective damping can be applied selectively during reception to reduce the effect of ringing at short ranges. A tuned circuit formed with the transducer by the transformer through which the transmitter drives the transducer is tuned by means of an air gap in the transformer core, which may be adjustable.

US 4451909 describes an ultrasonic wave distance detection system in which an ultrasonic wave pulse radiated into the selected area is reflected on an object. Said reflected ultrasonic wave pulse is partly received by an ultrasonic wave transducer. The received signal is supplied to a variable gain amplifier and the noise components are removed from the amplified signal through a band pass filter. The detected signal is compared with a predetermined level by a comparator, and the output of the comparator is applied to a flip-flop circuit. As the gain of the variable gain amplifier is set to be a lower level only at the beginning of the ultrasonic wave pulse to minimize the amplification of unnecessary signals without reducing the detection efficiency, a signal can be obtained which has a pulse width corresponding to the distance between the system and the object and thus the distance can be detected or measured.

US 5483501 discloses a short distance ultrasonic distance meter with provisions to reduce the ill-effects of ringing when measurements are of obstacles closer than about ten inches. In particular an opposite phase ultrasonic wave is introduced by a circuit and a strain sensor introduces negative feedback to effect cancellation of ringing.

Document US 4,677,599 describes an ultra-sonic sensor including a driver circuit outputting a high-frequency driver signal which orders a transmitter to transmit ultra-sonic waves toward a target object. The driver circuit also sends the driver signal to a receiver. The driver signal is superimposed on a receiver signal. The receiver differentiates the receiver signal and compares the differentiated receiver signal level to a threshold level to detect reception of the reflected ultra-sonic wave. The receiver also detects when the transmitter is actively transmitting the ultra-sonic waves toward the object and disables the aforementioned comparison at such times. Accordingly, by comparing the differentiated receiver signal level with the threshold, the influence directly transmitted ultra-sonic waves on detection of the reflected ultra-sonic wave is successfully avoided. In addition, by interrupting the comparison during a period in which the transmitter is transmitting the ultra-sonic waves, the threshold level can be low enough to allow the system to detect the reflected ultra-sonic wave with sensitivity.

Further documents that disclose devices for identifying objects by means of reflected waves are: EP 2 693 231 A1 and DE 10 2013 226085.

### Summary of the Invention

In this situation, it is a general object of the present invention to offer a technical solution capable overcoming one or more of the above drawbacks.

More in detail, it is an object of the present invention to make available a sensor capable of properly detecting obstacles in close proximity of the sensor increasing the echo acquisition window.

It is a further object of aspects of the invention to define a sensor and a process allowing detection of obstacles during ringing time without implementing complex hardware modification to the detection system.

It is a further object of aspects of the invention to provide a sensor configured to distinguish between actual echoes reflected by a nearby object and unwanted oscillations generated by the transducer.

It is an auxiliary object of the invention to offer a sensor with improved capability of determining a precise distance of objects in close proximity to the sensor itself.

It is also an object of certain aspects of the present invention to render available a sensor for determining the presence and/or the distance of an object which might be used for parking or low speed maneuvering assistance systems, for vehicle security or antitheft protection solutions, but also in different fields, such as robotics, in order to determine the presence of an object of or an obstacle in close proximity to a robot, or in any machine-to-machine application.

It is also an object of certain aspects of the present invention to provide a sensor for measuring an object distance e.g. using an amplitude scan sensor for determining the distance of a target

At least one of the above objects is substantially reached by a sensor according to one or more of the appended claims. One or more of the above objects is also substantially reached by a process according to any one of the appended process claims.

The sensor of the invention is defined according to claim 1; the process of the invention is defined in claim 16. Embodiments of a processing module part of the sensor are here below described. One exemplary embodiment concerns a processing module for use with the sensor for determining presence of an object, wherein the processing module is configured to be in communication with a transducer of the sensor configured for receiving external signals reflected by the object and for generating corresponding transduced signal, and further being configured to:
- receive the transduced signal from the transducer, the transduced signal is generated based on received external signals reflected by the object;
- determine an envelope of said transduced signal;
- determine slope and amplitude of one or more portions of the envelope;
- generate a first output signal if at least one of the one or more portions of the envelope satisfies at least one of the following conditions:
   - the one or more portions of the envelope has a positive amplitude and a positive slope,
   - the one or more portions of the envelope has a negative amplitude and a negative slope,
- determining if the object is present based on the first output signal;

before determining if the object is present, the processing module is further configured to:
   - output a second output signal corresponding to a condition of no presence of the object if none of the said conditions is satisfied;
   - to compare the first or the second output signal with a threshold,
wherein the first output signal is the envelope of the transduced signal and corresponds to the at least one or more portions of the envelope which satisfies at least one of said conditions and the second output signal has a value which is always below the threshold.

In a further embodiment, the second output signal is a null signal.

In a further embodiment, the processing module is configured to at least compare an amplitude of the first output signal with the threshold to determine a presence of the object.

In a further embodiment, the processing module comprises an amplifier configured for amplifying the transduced signal coming from the transducer, in particular the amplifier is configured for increasing the transduced signal amplitude.

In a further embodiment, the processing module comprises a filter configured for filtering the transduced signal, in particular the transduced and amplified signal.

Thereby, in a further embodiment, the filter is a band-pass filter, in particular a center frequency of the band-pass filter corresponding to the resonance frequency of the transducer.

In a further embodiment, the transduced signal is an ondulatory signal and the processing module comprises an envelope detector to provide an output which is the envelope of the transduced signal.

In a further embodiment, the processing module is configured to emit a presence signal if, based on the first output signal, an object is determined to be present.

Thereby, in a further embodiment, the processing module includes a calculation unit receiving the presence signal indicative of the presence of an object, the calculation unit having or determining an echo time, the echo time being substantially the time interval between the start of signal emission whose echo has been received and the time of receiving the presence signal indicative of the presence of the object, the calculation unit determining the distance of the object from the sensor based on the echo time.

In a further embodiment, the processing module comprises a signal slope detector receiving the transduced signal coming from the transducer and is configured for outputting a signal proportional to a slope of the transduced signal.

In a further embodiment, the transduced signal is an ondulatory signal and the processing module comprises an envelope detector to provide an output which is the envelope of the transduced signal, and a signal slope detector receiving the envelope of the transduced signal coming from the envelope detector and configured for outputting a signal proportional to a slope of the envelope of the transduced signal.

In a further embodiment, the processing module includes a sub module receiving the signal from the signal slope detector, the sub module being configured to, in case the envelope has a positive amplitude, output the first output signal if the received signal envelope has a positive slope and to output a second output signal if the received signal envelope has a negative slope.

Thereby, in a further embodiment, the sub module is configured to output the second output signal if the received signal envelope has a null slope.

Thereby, in a further embodiment, the second output signal has a value which is always below the threshold, in particular the second output signal is a null signal or an almost null signal.

In a further embodiment, the processing module includes a sub module receiving the signal from the signal slope detector, the sub module being configured to, in case the envelope has a negative amplitude, output the first output signal if the received signal envelope has a negative slope and to output a second output signal if the received signal envelope has a positive slope.

Thereby, in a further embodiment, the sub module is configured to output the second output signal if the received signal envelope has a null slope.

Thereby, in a further embodiment, the second output signal is a null signal or an almost null signal. In a further embodiment, the processing module comprises an envelope detector to provide an output which is the envelope of the transduced signal, the first output signal being the envelope of the transduced signal, in particular the second output signal being a null signal or an almost null signal.

In a further embodiment, the second output signal has a value which is always below the threshold, in particular the second output signal is a null signal or an almost null signal.

In a further embodiment, the processing module includes a comparator configured to compare the received output signal with a threshold to determine a presence of an object if the received output signal value is greater than the threshold, in particular the comparator being configured to compare the received output signal voltage with a voltage reference threshold.

In a further embodiment, the processing module is configured to process the envelope to derive a first output signal corresponding to a first portion of the envelope which satisfies at least one of the conditions

Thereby, in a further embodiment, the processing module is configured to process the envelope to discard a second portion of the envelope which does satisfy at least one of the conditions.

In a further embodiment, the processing module is configured to switch between a non-detection mode in which the received external signal is not processed and a detection mode in which an acquisition window is open and the received external signal is processed.

Thereby, in a further embodiment, the processing module is configured to open the acquisition window before a time at which a signal transmission decay of a signal emitted by the transducer would occur.

Thereby, in a further embodiment, the processing module is configured to open the acquisition window before a time at which the transmission signal would decay below a predetermined threshold.

Thereby, in a further embodiment, wherein said predetermined threshold is substantially coincident with the threshold for determining the presence of the object.

In a further embodiment, the processing module is configured to open the acquisition window at least at a time immediately after the end of the transmission signal.

In a further embodiment, the processing module is configured to open the acquisition window at a time after the end of the transmission signal plus a further predetermined time.

In a further embodiment, the processing module is configured to open the acquisition window at a time after the end of the transmission signal and before a time at which the transmission signal would decay below a predetermined threshold.

In a further embodiment, the processing module is configured to open the acquisition window at a time before the end of the transmission signal.

In a further embodiment, wherein the transducer is configured for receiving cross talk signals emitted by a different transducer, the processing module being configured to open the acquisition window before a time at which the cross talk signal would decay below a predetermined threshold.

Thereby, in a further embodiment, the processing module is configured to open the acquisition window as soon as the cross talk signal starts decaying.

Thereby, in a further embodiment, said predetermined threshold is coincident with the threshold for determining the presence of the object.

According to one aspect of the invention, a sensor for determining presence of an object is provided comprising:
- a transducer configured for receiving external signals reflected by the object and for generating corresponding transduced signal; and
- the processing module of any one of the embodiments described above.

In an exemplary embodiment, the transducer is configured for receiving external ondulatory signals in particular with a frequency lower than 200 MHz, more in particular lower than 100kHz.

In a further embodiment, the transducer is an acoustic transducer converting sound wave vibrations into electrical energy.

In a further embodiment, the transducer is an electro-mechanic transducer converting wave vibrations into electrical energy, in particular an ultrasonic transducer converting ultrasonic sound wave vibrations into electrical energy.

In a further embodiment, the transducer is a transceiver, i.e. an emitter and a receiver, for emitting a signal and receiving an external signal, particularly an echo signal.

In a further embodiment, the sensor includes a signal emitter, particularly an acoustic emitter, such as an ultrasonic emitter, said signal emitter being distinct from said transducer.

In a further embodiment, the transducer is an emitter and a receiver for emitting and receiving ondulatory signals.

In a further embodiment, the transducer is a piezoelectric transducer configured to emit and/or receive ultrasound signals.

In a further embodiment, the sensor comprises a transmit/receive circuit to emit a transmitted signal and receive external signals.

In a further embodiment, the sensor comprises a transmission circuit (20), particularly for an ultrasonic wave to be emitted, to emit a pulse burst, particularly an ultrasound wave pulse burst.

In a further embodiment, the sensor comprises a transmit/receive switching circuit for switching the transducer between an emitting condition driving the transducer to emit a transmitted signal and a receiving condition allowing the transducer to receive external signals.

According to another aspect of the invention, a process for determining presence of an object is provided, the process comprising the following steps:
- receiving a transduced signal by means of a processing module, the transduced signal is generated based on received external signals reflected by the object;;
- determining an envelope of said transduced signal;
- determining slope and amplitude of one or more portions of the envelope;
- processing the envelope of said transduced signal to generate a first output signal if at least one of one or more portions of the envelope satisfies at least one of the following conditions:
   - the one or more portions of the envelope has a positive amplitude and a positive slope,
   - the one or more portions of the envelope has a negative amplitude and a negative slope,
- determining if an object is present based on the first output signal, and before determining if the object is present, outputting a second output signal corresponding to a condition of no presence of the object if none of the said conditions is satisfied,
- comparing the first or the second output signal with a threshold,
wherein the first output signal is the envelope of the transduced signal and corresponds to the at least one or more portions of the envelope which satisfies at least one of the conditions and the second output signal has a value which is always below the threshold.

In a further embodiment, a vehicle is provided which includes a prefixed number (e.g. a plurality) of sensors according of anyone of the embodiments described above.

Thereby, in a further embodiment, the vehicle includes a bumper, the plurality of sensors being positioned in correspondence of, or fixed to the bumper.

Thereby, in a further embodiment, each of the transducers of said plurality of sensors is fixed to the bumper, the processing module being either directly connected to the transducer, or in communication with the transducer and remote from the transducer, or partly directly connected to the transducer and partly in communication with the transducer and remote from the transducer.

### Description of the Drawings

Aspects of the invention are shown in the attached drawings, which are provided by way of non-limiting example, wherein:
- Figures 1a to 1c show a pulse burst to be emitted, the amplified pulse burst emitted by the transducer with unwanted transducer oscillations after the end of the transmission plus the echo signal and the reflected echo signal envelopes;
- Figures 2a to 2c show a sequence of diagrams for measure management using standard and known ultrasound sensors;
- Figure 3 is a schematic representation of a sensor for determining the presence of an object according to aspects of the invention;
- Figures 3a to 3d show a sequence of exemplificative diagrams for measure management using sensors according to aspects of the present invention;
- Figure 4 illustrates the sensor decay deviation due to component tolerance and ambient conditions;
- Figures 5a and 5b show the advantages in detection offered by the sensors according to aspects of the present invention;
- Figures 6a and 6b show the advantages in detection offered by the sensors according to aspects of the present invention in case of indirect measures, i.e. using a first sensor to emit a signal and a second sensor to receive the object echo signal.

### Detailed Description

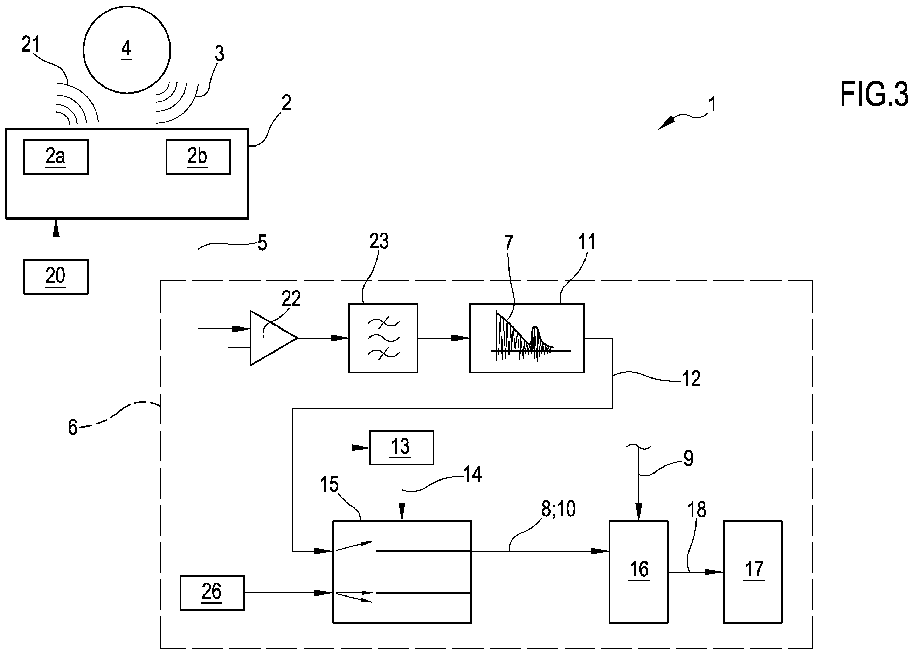

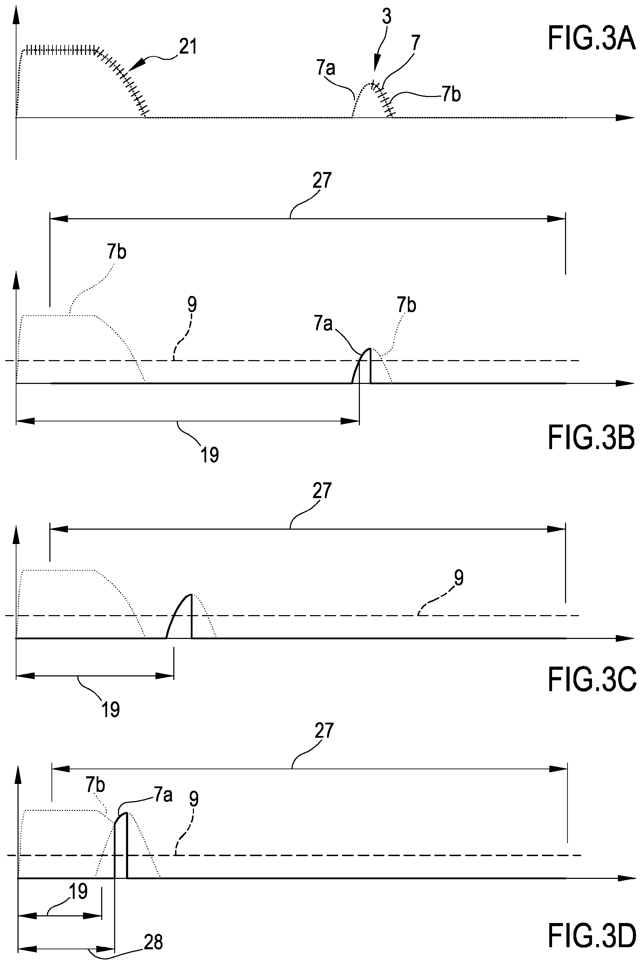

Figure 3 shows an exemplifying embodiment of a sensor 1 for determining the presence of an object.

The sensor 1 includes a transducer 2 configured for both emitting signals 21 and for receiving external signals 3, particularly those signals reflected by objects in proximity of the sensor 1 itself. When receiving an external signal 3, the transducer 2 generates a corresponding transduced signal 5.

In one of the embodiments of the invention, the transducer is a transceiver, i.e. an emitter 2a and a receiver 2b, for emitting a signal and receiving the external signal, particularly the echo signal. In other terms, though being represented in figure 3 as made up of two distinct elements, namely emitter 2a and receiver 2b, the transducer may be a single component configured for emitting and receiving signals. In this respect, the sensor comprises a switching circuit for switching the transducer between an emitting condition driving the transducer to emit a transmitted signal and a receiving condition allowing the transducer to receive external signals.

Clearly, in a different embodiment, the transducer 2 may include two or more physically distinct devices each configured for respectively emitting or receiving signals, depending on the user needs.

The transducer 2 is, in particular, an electro-mechanic transducer converting wave vibrations into electrical energy.

For example, the transducer 2 is an emitter and a receiver for emitting and receiving ondulatory signals, such as ondulatory signals with a frequency below 100 kHz. Though not limiting for the purposes of the present invention, the transducer may be an acoustic transducer converting sound wave vibrations into electrical energy.

One (non-limiting) embodiment of the invention provides for an ultrasonic transducer converting ultrasonic sound wave vibrations into electrical energy.

In the specific embodiment of the present description, the transducer 2 is a piezoelectric transducer configured to emit and/or receive ultrasound signals.

The sensor 1 further comprises a transmission circuit 20, particularly for an ultrasonic wave to be transmitted, to emit a pulse burst (particularly an ultrasound wave pulse burst). The transmission circuit may be either integrated with and directly connected to the transducer 2 or remotely placed in respect to the transducer 2, without affecting the inventive concept of the present invention. The transmission circuit is not further detailed since it is known in the art and may present different detailed structures.

After receiving and external signal, the transduced signal 5 is fed to a processing module 6 in communication with the transducer 2. As it will be apparent form the following description, the processing module 6 may be either integrated with and directly connected to the transducer 2 or remotely placed in respect to the transducer 2, without affecting the inventive concept of the present invention.

In general terms, the processing module 6 is configured to receive the transduced signal 5 from the transducer 2, to determine an envelope 7 of the transduced signal 5 and to output either a first output signal 8 or a second output signal 10 depending on the occurrence of certain predetermined conditions.

From the structural point of view, the processing module includes an amplifier 22 configured for amplifying the transduced signal 5 coming from the transducer (the amplifier is configured for increasing the transduced signal amplitude which is in general quite low). In the specific embodiment herein described, the amplifier 22 is an electronic device receiving and processing an analog signal. It is however not excluded the implementation of a digital amplifier increasing the power of a digital signal received from the transducer.

The processing module 6 further includes a filter 23 configured for filtering the transduced signal 5, in particular the transduced and amplified signal. The filter is a band-pass filter, and the centre frequency of the band-pass filter corresponds to the resonance frequency of the transducer.

Clearly also the filter 23 may be either an analog or a digital filter.

The amplified and filtered ondulatory signal coming from the transducer is fed to an envelope detector 11 to provide an output signal 12 which is the envelope 7 of the transduced (and amplified and filtered) signal 5. In general, the envelope detector 11 is configured to provide the positive amplitude envelope of the received signal. Of course, the concept of the present invention here-below described equivalently applies to a configuration in which the envelope detector determines the negative amplitude envelope of the received signal.

The envelope detector 11 may be implemented as a software routine (software program to be executed) run by a control unit; alternatively it may have the form of an electronic circuit that takes a high-frequency signal as input and provides an output which is the envelope of the original signal.

The processing module 6 is further configured to output the first output signal 8 if at least one of one or more portions of the envelope satisfies at least one of the following conditions:
- the one or more portions of the envelope 7 has a positive amplitude and a positive slope,
- the one or more portions of the envelope 7 has a negative amplitude a negative slope.

Then, based on the first output signal 8, the processing module 6 determines if the object 4 is present and eventually its distance from the sensor itself.

In detail, the processing module 6 is able to detect whether there is an increase in amplitude (envelope positive amplitude) of the envelope of the signal; the amplitude increase might be revealed by determining the positive slope.

Considering vice versa the envelope negative amplitude situation, the processing module 6 is able to detect whether there is a decrease in amplitude of the envelope of the signal which might be revealed by determining the negative slope.

In more detail, the processing module 6 is configured to process the envelope 7 to derive a first output signal 8 corresponding to a first portion 7a (in case of envelope positive amplitude, the `raising portion' with increasing amplitude and positive slope - see figures 3a and 3b for example) of the envelope itself which satisfies at least one of the above mentioned conditions.

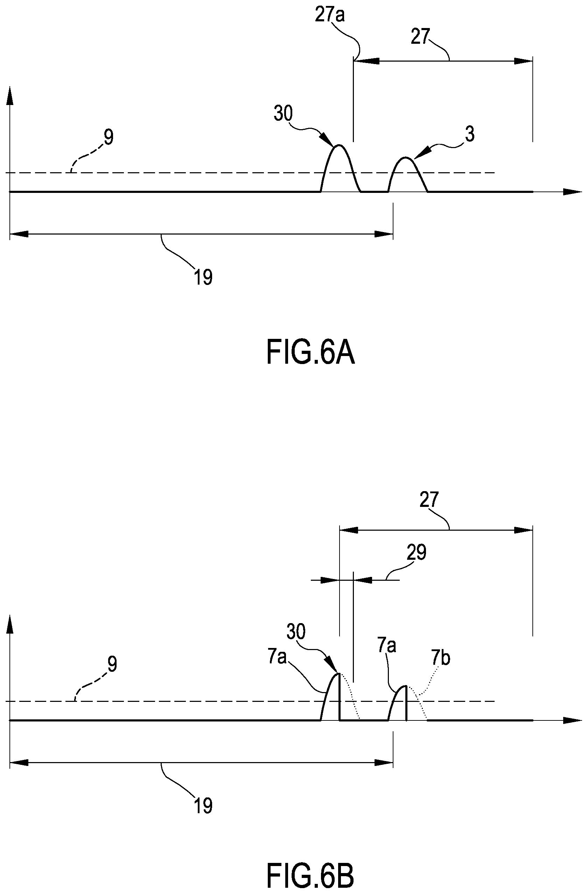

In this respect, the processing module 6 is further configured to process the envelope 7 to discard a second portion 7b of the envelope which does satisfy at least one of the conditions and to use the first output signal 8 to determine the presence and/or the distance of the object. In this respect, if processing the envelope positive amplitude, the second portion 7b of the envelope has null or negative slope (see figures 3a to 3d and 6b, for example).

To achieve the mentioned task, the processing module 6 includes a signal slope detector 13 receiving the transduced signal 5 coming from the transducer 2 and configured for outputting a signal 14 proportional to a slope of the transduced signal.

Of course, in an alternative embodiment which does not form part of the claimed invention, block 13 in figure 3 may be a unit for determining a change in the envelope slope greater than (or below) a certain prefixed value, as above explained.

Though not forming a part of the claimed invention, it could be also possible to implement both the two mentioned blocks in order to double check having a positive slope and a change in the envelope slope greater than a certain prefixed value (or a negative slope and a change in the envelope slope below a certain prefixed value).

The signal slope detector 13 may be implemented as a software routine (software program to be executed) run by a control unit; alternatively it may have the form of a differentiator, that is a circuit designed such that the output of the circuit is approximately directly proportional to the rate of change (the time derivative) of the input. An active differentiator may include some form of amplifier. A passive differentiator circuit may be made of only resistors and capacitors.

The output signal 14 from block 13 (e.g. signal slope detector) as well as the output signal 12 from the envelope detector 11 are fed to a sub module 15. In case the envelope has a positive amplitude, the sub module 15 is configured to output the first output signal 8 if the received signal envelope 12 has a positive slope and to output a second output signal 10 if the received signal envelope has a negative and/or a null slope.

As it may be understood, in case the envelope has a positive amplitude, the sub module 15 is configured to process the envelope to derive a first output signal 8 corresponding to the first (left) portion 7a of the envelope 7 which satisfies at least one of the mentioned two conditions, i.e. the envelope of the transduced signal has a positive slope. The processing module 6 is then further configured to use the first output signal 8 to determine the presence and/or the distance of the object 4.

In the situation in which the envelope has a negative amplitude, the sub module 15 is configured to process the envelope to derive a first output signal 8 corresponding to the first portion 7a of the envelope 7 which satisfies at least one of the mentioned two other conditions, i.e. the envelope of the transduced signal has a negative slope. The processing module 6 is again configured to use the first output signal 8 to determine the presence and/or the distance of the object 4.

In both situations, the sub module 15 is configured to process the envelope 7 to use a first portion 7a satisfying certain conditions and to discard the second (right) portion 7b of the envelope 7 which does satisfy the conditions previously mentioned.

Of course, the first output signal 8 may not be coincident with the first part 7a of the envelope signal 12 coming from the envelope detector 11. It is possible that the output signal is simply a function of the envelope signal 12, such as proportional to the envelope signal. The first output signal 8 has however to include information as to the presence of the object corresponding to the same information carried by the first part 7a of the envelope signal 7.

It's to be noted that the second output signal is a null signal, meaning that the processing module 6 outputs no signal in case at least one of the described conditions are not satisfied.

In this respect, the processing module 6 may include a signal generator 26, and in detail a null (or quasi null) signal generator, connected to the sub module 15.

The signal generator 26 generates the second output signal 10 which the sub module 15 emits in case the conditions above recalled are not satisfied.

It is clear that the second signal 10 may also be different from a null signal, but it must never trigger an object presence, e.g. when analyzed or compared with a threshold should result in no object detection.

It is relevant to mention that each of the described elements, i.e. the envelope detector 11, the signal slope detector 13, the sub module 15 and the signal generator 26, may be either a software module processed by a control unit or a physical component processing the analog signal to obtain the described functions.

The (first or second) output signal 8; 10 generated by the sub module 15 is sent to a comparator 16 which is configured to compare the output signal (amplitude) with a threshold 9 to eventually determine the presence of the object.

The first output signal 10 might be either greater than the threshold 9, thereby indicating potential presence of an object/obstacle, or lower than the threshold 9, providing indication of no object detection.

The second output signal 10 is always below the threshold 9 so not to generate any object detection.

The processing module 6, and in particular the comparator 16, is configured to emit a presence signal 18 if, based on the first output signal 8, an object is determined to be present.

Differently, no signal (or a signal indicating absence of objects) is emitted.

The processing module 6 additionally includes a calculation unit 17 receiving the presence signal 18 indicative of the presence of an object. The calculation unit 17 knows or determines an echo time 19.

The echo time 19 substantially corresponds to the time interval between the start of the signal emission whose echo has been received and the time of receiving the presence signal 18 indicative of the presence of the object.

The calculation unit 17, based on the echo time and knowledge of the signal speed determines the distance of the object 4 from the sensor 1. In general, the distance calculation may be made according to standard methods known in the art.

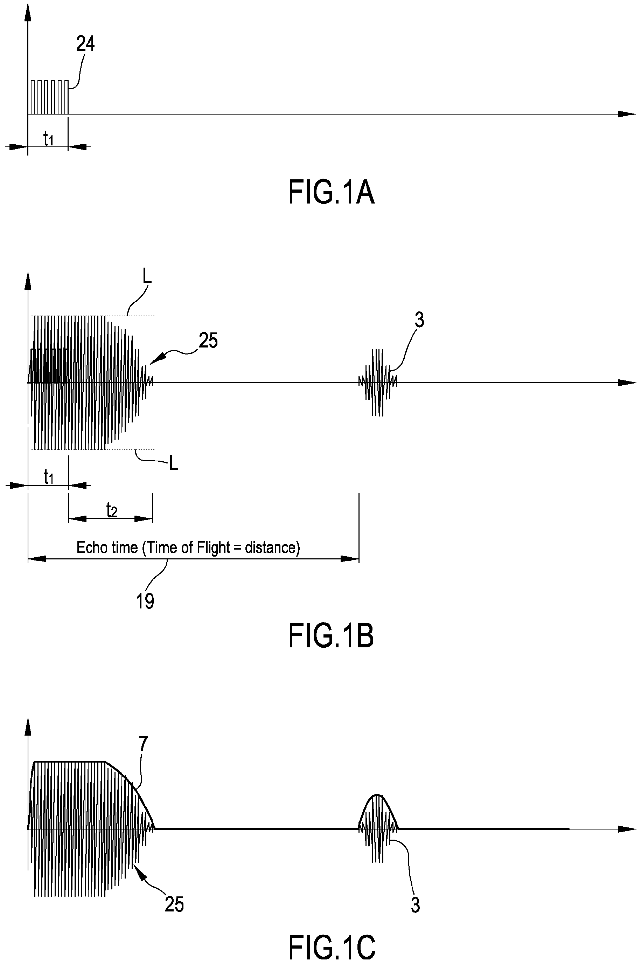

Figure 1a shows a pulse burst to be transmitted by the sensor 1 during a pulse burst time t₁ set by the operator.

The pulse burst is amplified (generally saturating the amplifier as shown in figure 1b - amplification limit L is shown too) and fed to the transducer 2 previously described.

As can be inferred from figure 1b, after time t₁ has expired, the transducer (e.g. the piezoelectric transducer) has an oscillation decay (lasting a second time t₂) during which the transducer continues to vibrate.

In case an echo acquisition window is early opened, the oscillation decay is seen as a signal received from the transducer generating a corresponding undesired transduced signal 25.

Figure 1b further shows an echo signal 3 which might be produced by a target/object to be detected.

Figure 1c shows the ondulatory signal envelope 7 of both the emitted signal and of the echo signal 3.

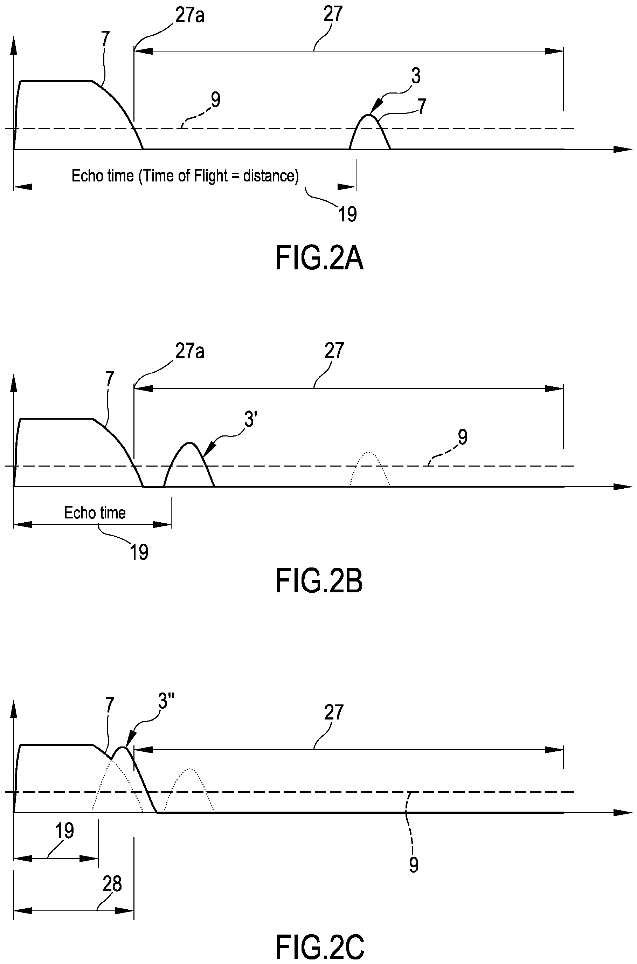

Figures 2a to 2c illustrate the measure management using standard ultrasound sensors. A short description of the state of the art detection methods is provided before showing the measurement management using a sensor in accordance with the structure previously disclosed (figures 3a-3d, 5a, 5b and 6b).

Figure 2a shows the envelope 7 of the emitted signal and the envelope 7 of the echo signal. A threshold 9 is also shown. If the amplitude of the detected signal is above the threshold 9, an object is considered to be present in close proximity to the sensor.

The echo acquisition window 27 is opened as soon as the oscillation decay amplitude falls below the threshold (point 27a). If opened upstream of the mentioned point 27a, an oscillation decay amplitude greater than the threshold is detected and a false detection occurs. Thereby, target/object detection is considered only and exclusively within this echo acquisition window 27.

Echo time 19 is also shown in fig 2a corresponding to the time incurred between signal emission and an amplitude of the received echo signal which is greater than the threshold 9 (signals above the threshold are "targets"). In other terms, echo time is time between transmission and when the echo signal overcomes the threshold. Echo time 19 (time of flight) is strictly related to the distance of the object, the higher the echo time, the higher is the object distance.

Figure 2b shows a diagram similar to the one of figure 2a. The exclusive difference is that the object is closer to the sensor (the echo signal amplitude 3' is higher due to the shorter distance).

Figure 2c illustrates a situation in which the object is so close to the sensor that it cannot be detected with standard technique. Indeed, the echo time best possible guess 28 is shorter than the time delay before opening the echo acquisition window. Indeed, echo signal 3" reaches the transducer before echo acquisition window is opened.

Therefore, objects at the distances of figures 2a and 2b are detected, the object at the distance represented in figure 2c is not detected with known systems/sensors.

Figures 3a to 3d show the principles of the measurement management concept according to aspects of the present invention, particularly those in which exclusively measures with positive slope are considered. In other terms, the case with positive amplitude envelope detection are shown and described hereinafter. However the same concepts may be correspondingly applied to the case in which the signal negative amplitude envelope is considered.

Figure 3a shows the signal 21 emitted by the transducer 2 and an echo signal 3 with an envelope 7 made up of a first portion 7a with positive slope and a second portion 7b with negative slope.

Figure 3b illustrates the situation of figure 3a in which the amplitude signal is represented in dotted line whenever having null or negative slope (second portion 7b of the envelope 7) and in continuous thick line whenever having positive slope (first portion 7a of the envelope 7). The transduced signal 5 having null or negative slope is disregarded (filtered) by the processing module 6 and exclusively the transduced signal 5 with positive slope is processed to determine presence of an object.

Therefore, first portion 7a of the envelope (positive slope) is processed, second portions 7b of the envelope (null or negative slope) is filtered and discarded.

Thanks to this new signal management, there is no more emitted signal (or oscillation decay) that can be confused with an echo signal (false target), so the echo acquisition window 27 can be opened greatly in advance.

Figure 3b shows a situation similar to the one of figure 2a. It is noted that the echo acquisition window 27 is opened well before with respect to the corresponding echo acquisition window 27 of the state of the art.

It is noted that the threshold 9 here is flat for sake of simplicity. However, the threshold level could be a "curve" or in any case not a simple line and it is specific for each application. It has to be designed in order to detect the dangerous obstacles, and avoiding the detection of non-relevant targets, like small curbstone, tow-bar, ground, etc...

Figure 3c corresponds to the situation shown in figure 2b; again the echo acquisition window 27 is opened at an earlier point in time and only the envelope positive slope (first portion 7a) is used for object detection.

Figure 3d corresponds to the situation shown in figure 2c. Here the advantage of the approach according to the invention appears evident.

Since only positive slope portion is considered, the echo signal can be detected at an earlier stage (closer object). Figure 3d shows that, once the null and negative sloped signals are removed, the raising edge of an echo signal envelope can be detected very early (and very close to the sensor). Therefore, the known system cannot detect an echo signal as close in time as disclosed in figure 2c. In the same conditions, the new approach (figure 3d) allows detection.

Moreover, since the rising edge of the signal is measured instead of the tail of the signal (as in previous approaches), the minimum real distance measurement (and the corresponding echo time 19) is even closer to the sensor as illustrated in figure 3d (echo time 19 is shorter than echo time best possible guess 28).

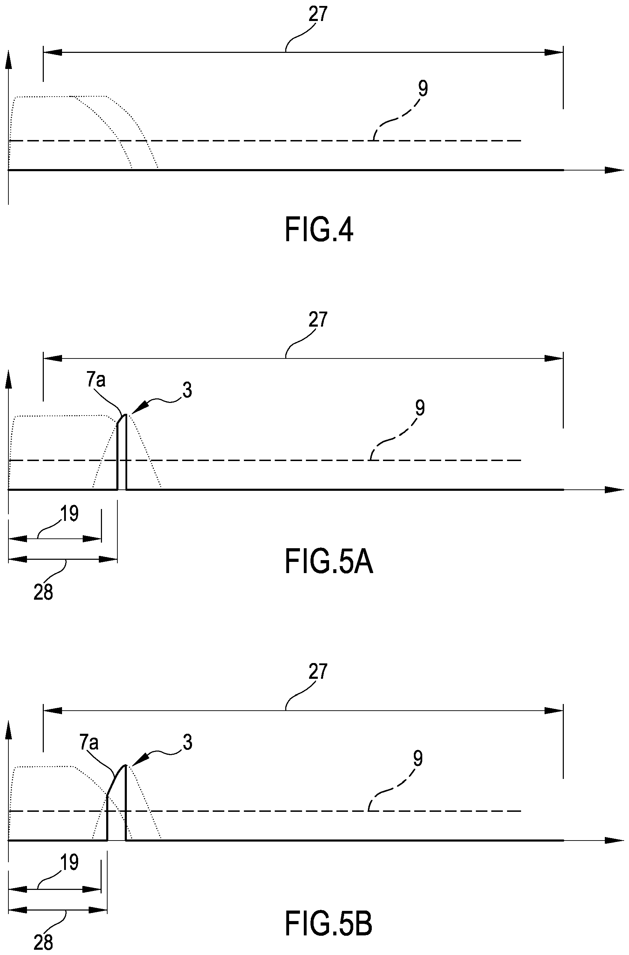

Figures 4, 5a and 5b provide additional information in respect to advantages of the described approach in case of sensor decay deviation.

As previously explained, emitted signal decay can be longer (or shorter) in particular due to the component tolerance and sensor temperature. In standard and known sensors, to have a safe echo acquisition window 27, the worst case for decay time has to be considered, otherwise the decay time could be interpreted as a close target/object.

Figure 4 simply shows how the oscillation decay can move back or forward depending on tolerances and ambient conditions.

Since the oscillation decay has always a negative slope, using the current approach the decay itself is always filtered/disregarded.

Figures 5a and 5b illustrate the same echo signal received from a close object taking into account the longest decay time possible (fig. 5a) and the shortest decay time possible (fig. 5b) .

As can be immediately inferred, the approach according to the present sensor implementation is totally insensitive to decay deviation.

Finally, the current approach is also advantageous in case of indirect measures (i.e. system in which a first sensor is used to transmit a signal and a second different sensor at a different location is used to receive an echo signal.

Figure 6a shows the standard situation using known sensors. The cross talk signal 30 (direct signal arriving at the second receiving sensor from the emitting sensor) is to be disregarded.

Therefore, as soon as the cross talk signal amplitude falls below the threshold 9, the echo acquisition window 27 is opened to sense any possible echo signal 3.

Figure 6b shows the approach using a sensor according to the present description.

Since the negative slope of the signal is filtered out, the echo acquisition windows 27 may be opened earlier (i.e. as soon as the cross talk signal 30 start decreasing in amplitude).

Similarly to the case of transmission signal decay signal, the acquisition window 27 can be opened in advance compared to the normal management of figure 6a. The earned time gap 29 is illustrated in figure 6b. This allows receiving and correctly processing echo signals coming from closer objects.

The described sensor and process is useful in range finding systems of the type in which an electro-mechanic transducer transmits a pulse burst of (e.g. acoustic) energy towards a surface whose presence is to be detected and/or distance is to be measured, and subsequent echo signals received from the transducer are monitored to determine the temporal location of an echo from that surface.

When employed in the automotive field principally for parking or low speed maneuvering assistance systems, but also for different automotive applications (e.g. for vehicle security or antitheft protection solutions), usually one or a set of transceiver transducers are used, in turn, to transmit and receive an ultrasonic signal and the echo reflected back by a possible obstacle.

In such a case the sensor are normally mounted on the bumper of the vehicle.

As already mentioned the sensor/s of the present invention may however be employed in different fields, such as robotics, in order to determine the presence of an object of or an obstacle in close proximity to a robot, or in any machine-to-machine application.

Furthermore, the sensor may also be useful in systems for measuring a distance e.g. using an amplitude scan sensor for determining the distance of a target.

Here below the components and corresponding reference numerals used in the detailed description are listed.

| **Part** | **Reference numeral** |
|---|---|
| Sensor | 1 |
| Transducer | 2 |
| Emitter | 2a |
| Receiver | 2b |
| Echo signals | 3 |
| Object | 4 |
| Transduced signal | 5 |
| Processing module | 6 |
| Signal envelope | 7 |
| First portion | 7a |
| Second portion | 7b |
| First output signal | 8 |
| Threshold | 9 |
| Second output signal | 10 |
| Envelope detector | 11 |
| Output of envelope detector | 12 |
| Signal slope detector | 13 |
| Signal proportional to a slope of the envelope | 14 |
| Sub module | 15 |
| Comparator | 16 |
| Calculation unit | 17 |
| Presence signal | 18 |
| Echo time | 19 |
| Transmission circuit | 20 |
| Emitted signal | 21 |
| Amplifier | 22 |
| Filter | 23 |
| Pulse burst | 24 |
| Pulse burst time | t₁ |
| Oscillation decay time | t₂ |
| Saturation limit | L |
| Undesired transduced signal | 25 |
| Signal generator | 26 |
| Echo acquisition window | 27 |
| Opening point of echo acquisition window | 27a |
| Echo time best possible guess | 28 |
| Earn time gap | 29 |
| Cross talk signal | 30 |

## Claims

1. A sensor (1) for determining presence of an object (4) comprising:
- a transducer (2) configured for receiving external signals (3) reflected by the object (4) and for generating corresponding transduced signal (5); and
- a processing module (6) for determining presence of the object (4), the processing module (6) being configured to be in communication with the transducer (2), and further being configured to:
∘ receive the transduced signal (5) from the transducer (2), the transduced signal (5) is generated based on received external signals (3) reflected by the object (4) ;
∘ determine an envelope (7) of said transduced signal (5) ;
∘ determine slope and amplitude of one or more portions of the envelope;
∘ generate a first output signal (8) if at least one of the one or more portions of the envelope satisfies at least one of the following conditions:
▪ the one or more portions of the envelope (7) has a positive amplitude and a positive slope,
▪ the one or more portions of the envelope (7) has a negative amplitude and a negative slope,
∘ determining if the object (4) is present based on the first output signal (8);
the sensor being **characterized in that** before determining if the object (4) is present, the processing module is further configured
∘ to output a second output signal (10) corresponding to a condition of no presence of the object if none of the said conditions is satisfied,
∘ to compare the first or the second output signal (8; 10) with a threshold (9),
wherein the first output signal (8) is the envelope (7) of the transduced signal and corresponds to the at least one or more portions of the envelope which satisfies at least one of said conditions and the second output signal (10) has a value which is always below the threshold (9).

2. A sensor (1) according to claim 1, wherein the second output signal (10) is a null signal.

3. A sensor (1) according to any one of the preceding claims, wherein the processing module (6) is further configured to use the first output signal to determine a distance of the object.

4. A sensor (1) according to any one of the preceding claims, wherein the processing module (6) is further configured to process the envelope to discard a second portion of the envelope which does satisfy at least one of the conditions.

5. A sensor (1) according to any one of the preceding claims, wherein the transduced signal (5) is an ondulatory signal and the processing module (6) comprises an envelope detector (11) to provide an output (12) which is the envelope (7) of the transduced signal (5).

6. A sensor (1) according to claim 5, wherein the processing module (6) comprises a signal slope detector (13) receiving the envelope (7) of the transduced signal (5) coming from the envelope detector (11) and configured for outputting a signal (14) proportional to a slope of the envelope (7) of the transduced signal (5).

7. A sensor (1) according to claim 6, wherein the processing module (6) includes a sub module (15) receiving the signal (14) from the signal slope detector (13), the sub module (6) being configured to, in case the envelope (7) has a positive amplitude, output the first output signal (8) if the received signal envelope (7) has a positive slope.

8. A sensor (1) according to any one of the preceding claims, wherein the processing module (6) includes a sub module (15) receiving the signal (14) from the signal slope detector (13), the sub module (15) being configured to, in case the envelope (7) has a negative amplitude, output the first output signal (8) if the received signal envelope (7) has a negative slope.

9. A sensor (1) according to any one of the preceding claims, wherein the processing module (6) includes a comparator (16) configured to compare the received first or second output signal (8; 10) with a threshold (9) to determine a presence of the object (4) if the received output signal value is greater than the threshold (9).

10. A sensor (1) according to claim 3, wherein the processing module (6) includes a calculation unit (17) receiving a presence signal (18) indicative of the presence of an object, the calculation unit (17) having or determining an echo time (19), the echo time (19) being substantially the time interval between the start of signal emission whose echo has been received and the time of receiving the presence signal (18) indicative of the presence of the object (4), the calculation unit (17) determining the distance of the object (4) from the sensor (1) based on the echo time (19).

11. A sensor (1) according to any one of the preceding claims, wherein the processing module (6) comprises an amplifier (22) configured for amplifying the transduced signal (5) coming from the transducer (2), and a filter (23) configured for filtering the transduced signal (5), in particular the transduced and amplified signal, in particular the filter (23) being a band-pass filter and a resonance frequency of the band-pass filter (23) corresponding to the resonance frequency of the transducer (2) .

12. A sensor (1) according to any of the preceding claims, wherein the processing module (6) is configured to switch between a non-detection mode in which the received external signal is not processed and a detection mode in which an acquisition window (27) is open and the received external signal is processed, the processing module (6) being configured to open the acquisition window (27) before a time at which the transmission signal would decay below a predetermined threshold (9) .

13. A sensor (1) according to any of the preceding claims, wherein the transducer (2) is an acoustic transducer converting sound wave vibrations into electrical energy, in particular the transducer (2) is configured for receiving external ondulatory signals (3) with a frequency lower than 2,5 MHz, optionally the sensor (1) being an ultrasonic sensor and the transducer (2) being an ultrasonic transducer converting ultrasonic sound wave vibrations into electrical energy.

14. A sensor (1) according to any of the preceding claims, wherein the sensor (1) further comprises a transmission circuit (20), particularly for an ultrasonic wave to be emitted, to emit a pulse burst, particularly an ultrasound wave pulse burst.

15. A sensor (1) according to any of the preceding claims, wherein the transducer (2) is a transceiver for emitting a signal (21) and receiving the external signals (3).

16. A process for determining presence of an object (4) comprising the following steps:
- receiving a transduced signal (5) by means of a processing module (6), the transduced signal (5) is generated based on received external signals (3) reflected by the object (4);
- determining an envelope (7) of said transduced signal (5);
- determining slope and amplitude of one or more portions of the envelope (7);
- processing the envelope (7) of said transduced signal (5) to generate a first output signal (8) if at least one of the one or more portions of the envelope satisfies at least one of the following conditions:
• the one or more portions of the envelope (7) has a positive amplitude and a positive slope,
• the one or more portions of the envelope (7) has a negative amplitude and a negative slope,
- determining if an object is present based on the first output signal (8), and
- before determining if the object is present, outputting a second output signal (10) corresponding to a condition of no presence of the object if none of the said conditions is satisfied,
- comparing the first or the second output signal (8; 10) with a threshold,
wherein the first output signal (8) is the envelope (7) of the transduced signal and corresponds to the at least one or more portions of the envelope which satisfies at least one of the conditions and the second output signal (10) has a value which is always below the threshold (9).

## Patentansprüche

1. Sensor (1) zum Bestimmen der Anwesenheit eines Objekts (4), aufweisend:
- einen Wandler (2) der zum Empfangen externer Signale (3), die durch das Objekt (4) reflektiert werden, und zum Erzeugen eines entsprechenden gewandelten Signals (5) ausgebildet ist; und
- ein Verarbeitungsmodul (6) zum Bestimmen einer Anwesenheit des Objekts (4), wobei das Verarbeitungsmodul (6) dazu ausgebildet ist, in Kommunikation mit dem Wandler (2) zu stehen, und ferner zu Folgendem ausgebildet ist:
∘ Empfangen des gewandelten Signals (5) von dem Wandler (2), wobei das gewandelte Signal (5) basierend auf empfangenen externen Signalen (3), die durch das Objekt (4) reflektiert werden, erzeugt wird;
∘ Bestimmen einer Hüllkurve (7) des gewandelten Signals (5);
∘ Bestimmen einer Flanke und Amplitude eines oder mehrerer Abschnitte der Hüllkurve;
∘ Erzeugen eines ersten Ausgangssignals (8), wenn mindestens einer des einen oder der mehreren Abschnitte der Hüllkurve mindestens eine der folgenden Bedingungen erfüllt:
▪ der eine oder die mehreren Abschnitte der Hüllkurve (7) weist eine positive Amplitude und eine positive Flanke auf,
▪ der eine oder die mehreren Abschnitte der Hüllkurve (7) weist eine negative Amplitude und eine negative Flanke auf,
∘ Bestimmen, ob das Objekt (4) anwesend ist, basierend auf dem ersten Ausgangssignal (8);
wobei der Sensor **dadurch gekennzeichnet ist, dass** vor Bestimmen, ob das Objekt (4) anwesend ist, das Verarbeitungsmodul ferner zu Folgendem ausgebildet ist
∘ Ausgeben eines zweiten Ausgangssignals (10), das einer Bedingung einer Nicht-Anwesenheit des Objekts entspricht, wenn keine der Bedingungen erfüllt wird,
∘ Vergleichen des ersten oder des zweiten Ausgangssignals (8; 10) mit einem Schwellenwert (9),
wobei das erste Ausgangssignal (8) die Hüllkurve (7) des gewandelten Signals ist und dem mindestens einen oder mehreren Abschnitten der Hüllkurve entspricht, der mindestens eine der Bedingungen erfüllt, und das zweite Ausgangssignal (10) einen Wert aufweist, der immer unter dem Schwellenwert (9) liegt.

2. Sensor (1) nach Anspruch 1, wobei das zweite Ausgangssignal (10) ein Nullsignal ist.

3. Sensor (1) nach einem der vorhergehenden Ansprüche, wobei das Verarbeitungsmodul (6) ferner dazu ausgebildet ist, das erste Ausgangssignal zum Bestimmen eines Abstands des Objekts zu verwenden.

4. Sensor (1) nach einem der vorhergehenden Ansprüche, wobei das Verarbeitungsmodul (6) ferner dazu ausgebildet ist, die Hüllkurve zu verarbeiten, um einen zweiten Abschnitt der Hüllkurve zu verwerfen, der mindestens eine der Bedingungen erfüllt.

5. Sensor (1) nach einem der vorhergehenden Ansprüche, wobei das gewandelte Signal (5) ein wellenförmiges Signal ist und das Verarbeitungsmodul (6) einen Hüllkurvendetektor (11) zum Bereitstellen einer Ausgabe (12) aufweist, die die Hüllkurve (7) des gewandelten Signals (5) ist.

6. Sensor (1) nach Anspruch 5, wobei das Verarbeitungsmodul (6) einen Signalflankendetektor (13) aufweist, der die Hüllkurve (7) des gewandelten Signals (5) empfängt, die von dem Hüllkurvendetektor (11) stammt, und zum Ausgeben eines Signals (14) proportional zu einer Flanke der Hüllkurve (7) des gewandelten Signals (5) ausgebildet ist.

7. Sensor (1) nach Anspruch 6, wobei das Verarbeitungsmodul (6) ein Untermodul (15) aufweist, das das Signal (14) von dem Signalflankendetektor (13) empfängt, wobei das Untermodul (6) dazu ausgebildet ist, falls die Hüllkurve (7) eine positive Amplitude aufweist, das erste Ausgangssignal (8) auszugeben, wenn die empfangene Signalhüllkurve (7) eine positive Flanke aufweist.

8. Sensor (1) nach einem der vorhergehenden Ansprüche, wobei das Verarbeitungsmodul (6) ein Untermodul (15) aufweist, das das Signal (14) von dem Signalflankendetektor (13) empfängt, wobei das Untermodul (15) dazu ausgebildet ist, falls die Hüllkurve (7) eine negative Amplitude aufweist, das erste Ausgangssignal (8) auszugeben, wenn die empfangene Signalhüllkurve (7) eine negative Flanke aufweist.

9. Sensor (1) nach einem der vorhergehenden Ansprüche, wobei das Verarbeitungsmodul (6) einen Komparator (16) aufweist, der dazu ausgebildet ist, das empfangene erste oder zweite Ausgangssignal (8; 10) mit einem Schwellenwert (9) zu vergleichen, um eine Anwesenheit des Objekts (4) zu bestimmen, wenn der empfangene Ausgangssignalwert größer als der Schwellenwert (9) ist.

10. Sensor (1) nach Anspruch 3, wobei das Verarbeitungsmodul (6) eine Berechnungseinheit (17) aufweist, die ein Anwesenheitssignal (18) empfängt, das die Anwesenheit eines Objekts anzeigt, wobei die Berechnungseinheit (17) eine Echozeit (19) aufweist oder bestimmt, wobei die Echozeit (19) im Wesentlichen das Zeitintervall zwischen dem Beginn einer Signalemission, deren Echo empfangen wurde, und der Zeit eines Empfangens des Anwesenheitssignals (18), das die Anwesenheit des Objekts (4) anzeigt, ist, wobei die Berechnungseinheit (17) den Abstand des Objekts (4) von dem Sensor (1) basierend auf der Echozeit (19) bestimmt.

11. Sensor (1) nach einem der vorhergehenden Ansprüche, wobei das Verarbeitungsmodul (6) einen Verstärker (22), der zum Verstärken des von dem Wandler (2) stammenden gewandelten Signals (5) ausgebildet ist, und einen Filter (23), der zum Filtern des gewandelten Signals (5), insbesondere des gewandelten und verstärkten Signals, ausgebildet ist, aufweist, insbesondere wobei der Filter (23) ein Bandpassfilter ist und eine Resonanzfrequenz des Bandpassfilters (23) der Resonanzfrequenz des Wandlers (2) entspricht.

12. Sensor (1) nach einem der vorhergehenden Ansprüche, wobei das Verarbeitungsmodul (6) dazu ausgebildet ist, zwischen einem Nicht-Detektionsmodus, in dem das empfangene externe Signal nicht verarbeitet wird, und einem Detektionsmodus, in dem ein Erfassungsfenster (27) geöffnet ist und das empfangene externe Signal verarbeitet wird, umzuschalten, wobei das Verarbeitungsmodul (6) dazu ausgebildet ist, das Erfassungsfenster (27) vor einer Zeit zu öffnen, zu der das Übertragungssignal unter einen vorbestimmten Schwellenwert (9) abfallen würde.

13. Sensor (1) nach einem der vorhergehenden Ansprüche, wobei der Wandler (2) ein akustischer Wandler ist, der Schallwellenschwingungen in elektrische Energie umwandelt, insbesondere wobei der Wandler (2) zum Empfangen externer wellenförmiger Signale (3) mit einer Frequenz unter 2,5 MHz ausgebildet ist, optional wobei der Sensor (1) ein Ultraschallsensor ist und der Wandler (2) ein Ultraschallwandler ist, der Ultraschall-Schallwellenschwingungen in elektrische Energie umwandelt.

14. Sensor (1) nach einem der vorhergehenden Ansprüche, wobei der Sensor (1) ferner eine Übertragungsschaltung (20), insbesondere für eine zu emittierende Ultraschallwelle, aufweist, um ein Impulsbündel, insbesondere ein Ultraschallwellenimpulsbündel, zu emittieren.

15. Sensor (1) nach einem der vorhergehenden Ansprüche, wobei der Wandler (2) ein Sendeempfänger zum Emittieren eines Signals (21) und Empfangen der externen Signale (3) ist.

16. Prozess zum Bestimmen einer Anwesenheit eines Objekts (4), aufweisend die folgenden Schritte:
- Empfangen eines gewandelten Signals (5) mittels eines Verarbeitungsmoduls (6), wobei das gewandelte Signal (5) basierend auf empfangenen externen Signalen (3), die durch das Objekt (4) reflektiert werden, erzeugt wird;
- Bestimmen einer Hüllkurve (7) des gewandelten Signals (5);
- Bestimmen einer Flanke und Amplitude eines oder mehrerer Abschnitte der Hüllkurve (7);
- Verarbeiten der Hüllkurve (7) des gewandelten Signals (5), um ein erstes Ausgangssignal (8) zu erzeugen, wenn mindestens einer des einen oder der mehreren Abschnitte der Hüllkurve mindestens eine der folgenden Bedingungen erfüllt:
• der eine oder die mehreren Abschnitte der Hüllkurve (7) weist eine positive Amplitude und eine positive Flanke auf,
• der eine oder die mehreren Abschnitte der Hüllkurve (7) weist eine negative Amplitude und eine negative Flanke auf,
- Bestimmen, ob ein Objekt anwesend ist, basierend auf dem ersten Ausgangssignal (8), und
- vor Bestimmen, ob das Objekt anwesend ist, Ausgeben eines zweiten Ausgangssignals (10), das einer Bedingung einer Nicht-Anwesenheit des Objekts entspricht, wenn keine der Bedingungen erfüllt wird,
- Vergleichen des ersten oder des zweiten Ausgangssignals (8; 10) mit einem Schwellenwert,
wobei das erste Ausgangssignal (8) die Hüllkurve (7) des gewandelten Signals ist und dem mindestens einen oder mehreren Abschnitte der Hüllkurve entspricht, der mindestens eine der Bedingungen erfüllt, und das zweite Ausgangssignal (10) einen Wert aufweist, der immer unter dem Schwellenwert (9) liegt.

## Revendications

1. Capteur (1) destiné à déterminer la présence d'un objet (4) comprenant :
un transducteur (2) configuré pour recevoir des signaux externes (3) réfléchis par l'objet (4) et pour générer un signal transduit (5) ; et
un module de traitement (6) pour déterminer la présence de l'objet (4), le module de traitement (6) étant configuré pour être en communication avec le transducteur (2), et étant en outre configuré pour :
recevoir le signal transduit (5) depuis le transducteur (2), le signal transduit (5) étant généré sur la base des signaux externes (3) reçus réfléchis par l'objet (4) ;
déterminer une enveloppe (7) dudit signal transduit (5) ;
déterminer une pente et une amplitude d'une ou plusieurs parties de l'enveloppe ;
générer un premier signal de sortie (8) si au moins l'une de la ou des parties de l'enveloppe satisfait au moins l'une des conditions suivantes :
la ou les parties de l'enveloppe (7) ont une amplitude positive et une pente positive,
la ou les parties de l'enveloppe (7) ont une amplitude négative et une pente négative,
déterminer si l'objet (4) est présent sur la base du premier signal de sortie (8);
le capteur étant **caractérisé en ce que**, avant de déterminer si l'objet (4) est présent, le module de traitement est en outre configuré pour
délivrer un second signal de sortie (10) correspondant à une condition de non-présence de l'objet si aucune desdites conditions n'est satisfaite,
comparer le premier ou le second signal de sortie (8 ; 10) à un seuil (9),
dans lequel le premier signal de sortie (8) est l'enveloppe (7) du signal transduit et correspond aux au moins une ou plusieurs parties de l'enveloppe qui satisfont au moins l'une desdites conditions et le second signal de sortie (10) a une valeur qui est toujours inférieure au seuil (9).

2. Capteur (1) selon la revendication 1, dans lequel le second signal de sortie (10) est un signal zéro.

3. Capteur (1) selon l'une quelconque des revendications précédentes, dans lequel le module de traitement (6) est en outre configuré pour utiliser le premier signal de sortie pour déterminer une distance de l'objet.

4. Capteur (1) selon l'une quelconque des revendications précédentes, dans lequel le module de traitement (6) est en outre configuré pour traiter l'enveloppe pour écarter une deuxième partie de l'enveloppe qui ne satisfait pas au moins l'une des conditions.

5. Capteur (1) selon l'une quelconque des revendications précédentes, dans lequel le signal transduit (5) est un signal ondulatoire et le module de traitement (6) comprend un détecteur d'enveloppe (11) pour produire une sortie (12) qui est l'enveloppe (7) du signal transduit (5).

6. Capteur (1) selon l'une quelconque des revendications précédentes, dans lequel le module de traitement (6) comprend un détecteur de pente de signal (13) recevant l'enveloppe (7) du signal transduit (5) provenant du détecteur d'enveloppe (11) et configuré pour délivrer un signal (14) proportionnel à une pente de l'enveloppe (7) du signal transduit (5).

7. Capteur (1) selon la revendication 6, dans lequel le module de traitement (6) comprend un sous-module (15) recevant le signal (14) provenant du détecteur de pente de signal (13), le sous-module (6) étant configuré pour, dans le cas où l'enveloppe (7) a une amplitude positive, délivrer le premier signal de sortie (8) si l'enveloppe de signal (7) reçue a une pente positive.

8. Capteur (1) selon l'une quelconque des revendications précédentes, dans lequel le module de traitement (6) comprend un sous-module (15) recevant le signal (14) provenant du détecteur de pente de signal (13), le sous-module (15) étant configuré pour, dans le cas où l'enveloppe (7) a une amplitude négative, délivrer le premier signal de sortie (8) si l'enveloppe de signal (7) reçue a une pente négative.

9. Capteur (1) selon l'une quelconque des revendications précédentes, dans lequel le module de traitement (6) comprend un comparateur (16) configuré pour comparer le premier ou le second signal de sortie (8 ; 10) reçu à un seuil (9) pour déterminer une présence de l'objet (4) si la valeur de signal de sortie reçue est supérieure au seuil (9).

10. Capteur (1) selon la revendication 3, dans lequel le module de traitement (6) comprend une unité de calcul (17) recevant un signal de présence (18) indiquant la présence d'un objet, l'unité de calcul (17) ayant ou déterminant un temps d'écho (19), le temps d'écho (19) étant sensiblement l'intervalle temporel entre le début de l'émission de signal dont l'écho a été reçu et le moment de réception du signal de présence (18) indiquant la présence de l'objet (4), l'unité de calcul (17) déterminant la distance de l'objet (4) par rapport au capteur (1) sur la base du temps d'écho (19).

11. Capteur (1) selon l'une quelconque des revendications précédentes, dans lequel le module de traitement (6) comprend un amplificateur (22) configuré pour amplifier le signal transduit (5) provenant du transducteur (2), et un filtre (23) configuré pour filtrer le signal transduit (5), en particulier le signal transduit et amplifié, le filtre (23) étant en particulier un filtre passe-bande et une fréquence de résonance du filtre passe-bande (23) correspondant à la fréquence de résonance du transducteur (2).

12. Capteur (1) selon l'une quelconque des revendications précédentes, dans lequel le module de traitement (6) est configuré pour commuter entre un mode de non détection dans lequel le signal externe reçu n'est pas traité et un mode de détection dans lequel une fenêtre d'acquisition (27) est ouverte et le signal externe reçu est traité, le module de traitement (6) étant configuré pour ouvrir la fenêtre d'acquisition (27) avant un moment auquel le signal de transmission décroît sous un seuil prédéterminé (9).

13. Capteur (1) selon l'une quelconque des revendications précédentes, dans lequel le transducteur (2) est un transducteur acoustique convertissant des vibrations d'onde sonore en énergie électrique, en particulier le transducteur (2) est configuré pour recevoir des signaux ondulatoires externes (3) avec une fréquence inférieure à 2,5 MHz, facultativement le capteur (1) étant un capteur à ultrasons et le transducteur (2) étant un transducteur à ultrasons convertissant des vibrations d'onde sonore à ultrasons en énergie électrique.

14. Capteur (1) selon l'une quelconque des revendications précédentes, dans lequel le capteur (1) comprend en outre un circuit de transmission (20), en particulier pour émettre une onde ultrasonore, pour émettre une rafale d'impulsions, en particulier une rafale d'impulsions d'onde ultrasonore.

15. Capteur (1) selon l'une quelconque des revendications précédentes, dans lequel le transducteur (2) est un émetteur-récepteur destiné à émettre un signal (21) et à recevoir les signaux externes (3).

16. Processus de détermination de la présence d'un objet (4) comprenant les étapes suivantes :
la réception d'un signal transduit (5) au moyen d'un module de traitement (6), le signal transduit (5) étant généré sur la base de signaux externes (3) reçus réfléchis par l'objet (4) ;
la détermination d'une enveloppe (7) dudit signal transduit (5) ;
la détermination d'une pente et d'une amplitude d'une ou plusieurs parties de l'enveloppe (7) ;
le traitement de l'enveloppe (7) dudit signal transduit (5) pour générer un premier signal de sortie (8) si au moins l'une de la ou des parties de l'enveloppe satisfait au moins l'une des conditions suivantes :
la ou les parties de l'enveloppe (7) ont une amplitude positive et une pente positive,
la ou les parties de l'enveloppe (7) ont une amplitude négative et une pente négative,
la détermination de si un objet est présent sur la base du premier signal de sortie (8), et
avant la détermination de si l'objet est présent, la délivrance d'un second signal de sortie (10) correspondant à une condition de non-présence de l'objet si aucune desdites conditions n'est satisfaite,
la comparaison du premier ou du second signal de sortie (8 ; 10) à un seuil,
dans lequel le premier signal de sortie (8) est l'enveloppe (7) du signal transduit et correspond à l'au moins une ou plusieurs parties de l'enveloppe qui satisfait au moins l'une desdites conditions et le second signal de sortie (10) a une valeur qui est toujours inférieure au seuil (9).
